# EUROPEAN PATENT SPECIFICATION

(11) **EP 2 884 621 B1**
(45) Date of publication and mention of the grant of the patent: **23.08.2017**
(21) Application number: 14275098.3
(22) Date of filing: 01.05.2014
(51) Int. Cl.: H02J 7/02, G09F 3/20, G09G 5/00

(54) **SYSTEM FOR WIRELESSLY CHARGING ELECTRONIC TAG**
SYSTEM ZUM DRAHTLOSEN AUFLADEN EINES ELEKTRONISCHEN ETIKETTS
SYSTÈME DE CHARGE SANS FIL D'ÈTIQUETTE ÈLECTRONIQUE

(30) Priority: 13.12.2013 KR 20130155686
(43) Date of publication of application: 17.06.2015
(73) Proprietor: Samsung Electro-Mechanics Co., Ltd., Gyeonggi-do (KR)
(72) Inventor: Chang, Ki Won, Gyeonggi-Do (KR); Sung, Jae Suk, Gyeonggi-Do (KR); Kang, Chang Soo, Gyeonggi-Do (KR); Oh, Soon Tack, Gyeonggi-Do (KR); Lee, Sung Uk, Gyeonggi-Do (KR); Lim, Hyun Keun, Gyeonggi-Do (KR); Kim, Si Hyung, Gyeonggi-Do (KR); Park, Chul Gyun, Gyeonggi-Do (KR)
(74) Representative: Potter Clarkson LLP

(56) References cited:
- EP-A1- 0 623 873
- JP-A- 2006 109 995
- US-A1- 2005 218 218
- US-A1- 2010 123 463
- US-A1- 2012 013 467
- DEUKHEE PARK ET AL: "135-Channel electronic-paper driver IC for electronic shelf label", CONSUMER ELECTRONICS (ICCE), 2011 IEEE INTERNATIONAL CONFERENCE ON, IEEE, 9 January 2011 (2011-01-09), pages 801-802, XP031921520, DOI: 10.1109/ICCE.2011.5722873 ISBN: 978-1-4244-8711-0

## Description

### CROSS-REFERENCE TO RELATED APPLICATION

This application claims the benefit of Korean Patent Application No. 10-2013-0155686 filed on December 13, 2013, with the Korean Intellectual Property Office.

### BACKGROUND

The present disclosure relates to an electronic tag, a system for wirelessly charging an electronic tag, an electronic shelf label system, and a method for managing power consumption by an electronic tag.

In general, an electronic shelf label system is provided to automatically manage merchandise item information and may include a plurality of electronic tags respectively provided for respective merchandise items, a gateway (GW) configuring a wireless network with the electronic tags to perform wireless communications, and a server performing wired communications with the gateway so as to control and manage the electronic tags via the gateway.

The electronic tag performs wireless communications with the server or with the gateway and electrically displays merchandise item information on a screen. To this end, the electronic tag has a battery provided therein.

Such batteries are required to be regularly replaced, and continual battery replacement may be disadvantageous in terms of time and cost.

EP 0623873 A1 discloses a device for displaying prices electronically on shelves. The device has transmitting elements that are near display units at the edges of the shelves. Components of the display units receive energy which is radiated by the transmitting elements inductively. A control transmitter applies an alternating current to the transmitting elements in pauses between data packets, and charges the current sources of the display units. Thus, EP 0 623 873 A1 discloses:
a system for wirelessly charging an electronic tag, comprising:
   a wireless power transmitting device configured to transmit device transmitting power in a wireless power transmission scheme; and
   an electronic tag configured to receive the power from the wireless power transmitting device in a wireless power transmission scheme so as to be charged and displaying merchandise item information on a screen, wherein the electronic tag includes:
      a wireless power receiving unit configured to receive power in a wireless power transmission scheme;
      a battery configured to be charged with the power received from the wireless power receiving unit;
      a monitoring unit configured to monitor a power state of the battery;
      and a first wireless communications unit configured to wirelessly transmit the information on the power state of the battery from the monitoring unit together with tag identification information in a first wireless communications scheme,
      wherein the wireless power transmitting device includes: a power management unit configured to supply power to be wirelessly transmitted.

US 2010/123463 A1 discloses a battery-driven display device having a battery, first and second comparators, a non-volatile memory, a controller driven by the voltage of the battery, and a display device. The non-volatile memory stores first and second reference voltages of the first and second comparators measured using a stabilized power supply. The controller detects when the first and second reference voltages become lower than the voltage of the battery when the battery is connected, and determines the time at which an end-point voltage of the battery will be reached based on first and second detection times at the time of measurement and the measured reference voltages.

### SUMMARY

An aspect of the present disclosure may provide an electronic tag, a system for charging an electronic tag, an electronic shelf label system, and a method for managing power of an electronic tag, in which the wireless charging of the electronic tag and the monitoring and controlling of the power of the electronic tag can be performed integrally.

According to an aspect of the present disclosure that is not claimed, an electronic tag may include: a wireless power receiving unit configured to receive power in a wireless power transmission scheme; a battery configured to be charged with the power received from the wireless power receiving unit; a monitoring unit configured to monitor a power state of the battery; a display unit configured to display information on the power state of the battery from the monitoring unit on a screen; and a first wireless communications unit configured to wirelessly transmit the information on the power state of the battery from the monitoring unit together with tag identification information in a first wireless communications scheme.

The wireless power transmission scheme may be a magnetic induction scheme or a magnetic resonance scheme.

The first wireless communications unit may transmit the information on the power state of the battery and the tag identification information to a management apparatus in the first wireless communications scheme.

The electronic tag may further include: a second wireless communications unit, if the information on the power state of the battery includes information on a low or empty charge state or a full charge state, configured to transmit a message indicating the information on a low or empty charge state or a full charge state to a terminal of a manager in a second wireless communications scheme.

According to another aspect of the present disclosure that is claimed herein, a system for wirelessly charging an electronic tag includes: a wireless power transmitting device configured to transmit power in a wireless power transmission scheme; and an electronic tag configured to receive the power from the wireless power transmitting device in a wireless power transmission scheme so as to be charged and displaying merchandise item information on a screen, wherein the electronic tag includes: a wireless power receiving unit configured to receive power in a wireless power transmission scheme; a battery configured to be charged with the power received from the wireless power receiving unit; a monitoring unit configured to monitor a power state of the battery; a display unit configured to display information on the power state of the battery from the monitoring unit on a screen; and a first wireless communications unit configured to wirelessly transmit the information on the power state of the battery from the monitoring unit together with tag identification information in a first wireless communications scheme.

The wireless power transmitting device includes: a power management unit configured to supply power to be wirelessly transmitted; and a wireless power transmitting unit being electrically connected to the power management unit and being slidable along a tag holding rail so as to wirelessly transmit the power from the power management unit.

The wireless power transmitting unit may be electrically connected to the power management unit and may be slidable along the tag holding rail.

The wireless power transmitting device may include: a power management unit configured to supply power to be wirelessly transmitted; and first to N^{th} wireless power transmitting units being electrically connected to the power management unit and being fixedly disposed in different areas on tag holding rails so as to wirelessly transmit the power from the power management unit.

Each of the first to N^{th} wireless power transmitting units may include a magnetically-inductive transmitting coil part or a magnetically-resonant transmitting part.

The first to N^{th} wireless power transmitting units may be electrically connected to the power management in series or in parallel.

The first wireless communications unit may transmit the information on the power state of the battery to a management apparatus using wireless communications so that the information on the power state of the battery is transmitted to a terminal of a manager.

The electronic tag may further include: a second wireless communications unit, if the information on the power state of the battery includes information on a low or empty charge state or a full charge state, configured to transmit a message indicating the information on a low or empty charge state or a full charge state to a terminal of a manager in a second wireless communications scheme.

The system of Claim 1 hereof in an embodiment of the invention is configured as an electronic shelf label system that further includes: a management apparatus configured to receive the information on the power state of the battery from the electronic tag using wireless communications.

The wireless power transmitting device in an aspect of the disclosure that is not claimed herein includes: a power management unit configured to supply power to be wirelessly transmitted; and a wireless power transmitting unit configured to be electrically connected to the power management unit and be slidable along a tag holding rail so as to wirelessly transmit the power from the power management unit.

The wireless power transmitting unit may be electrically connected to the power management unit and may be slidable along the tag holding rail.

The wireless power transmitting device may include: a power management unit configured to supply power to be wirelessly transmitted; and first to N^{th} wireless power transmitting units being electrically connected to the power management unit and being disposed in different areas on tag holding rails so as to wirelessly transmit the power from the power management unit.

Each of the first to N^{th} wireless power transmitting units may include a magnetically-inductive transmitting coil part or a magnetically-resonant transmitting part.

The first to N^{th} wireless power transmitting units may be electrically connected to the power management in series or in parallel.

The first wireless communications unit may transmit the information on the power state of the battery to a management apparatus using wireless communications so that the information on the power state of the battery is transmitted to a terminal of a manager.

The electronic tag may further include: a second wireless communications unit, if the information on the power state of the battery includes information on a low or empty charge state or a full charge state, configured to transmit a message indicating the information on a low or empty charge state or a full charge state to a terminal of a manager in a second wireless communications scheme.

According to another aspect of the present disclosure that is not claimed, a method for managing power of an electronic tag may include: wirelessly receiving, by an electronic tag at a charge location on a tag holding rail, power from a wireless power transmitting device disposed at the charge location so that a battery in the electronic tag is charged; monitoring, by a monitoring unit in the electronic tag, a power state of the battery; and transmitting, by a first wireless communications unit in the electronic tag, to a management apparatus information on a power state of the battery from the monitoring unit in a first wireless communications scheme.

The method may further include: if the information on the power state of the battery includes information on a low or empty charge state or a full charge state, transmitting, by the electronic tag, a message indicating whether the information on the power state of the battery includes information on a low or empty charge state or a full charge state to a terminal of a manager in a second wireless communications scheme.

According to another aspect of the present disclosure that is not claimed, a method for managing power of an electronic tag in an electronic shelf label system may include: wirelessly receiving, by an electronic tag at a charge location on a tag holding rail, power from a wireless power transmitting device disposed at the charge location so that a battery in the electronic tag is charged; monitoring, by a monitoring unit in the electronic tag, a power state of a battery; transmitting, by a first wireless communications unit in the electronic tag, to a management apparatus information on the power state of the battery from the monitoring unit in a first wireless communications scheme; receiving, by the management apparatus, the information on the power state of the battery to store the information on the power state of the battery in association with the electronic tag; and transmitting, if the information on the power state of the battery includes information on a low or empty charge state or a full charge state, a message indicating it using wireless communications.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a block diagram of an electronic tag according to an exemplary embodiment of the present disclosure;
FIG. 2 is a view showing the configuration of a system for wirelessly charging an electronic tag according to an exemplary embodiment of the present disclosure;
FIG. 3 is a view showing a wireless power transmitting device according to an exemplary embodiment of the present disclosure;
FIG. 4 is a view showing a wireless power transmitting device according to another exemplary embodiment of the present disclosure;
FIG. 5 is a view showing a wireless power transmitting device according to another exemplary embodiment of the present disclosure;
FIG. 6 is a block diagram of an electronic tag according to another exemplary embodiment of the present disclosure;
FIG. 7 is a view showing movement of the wireless power transmitting unit according to an exemplary embodiment of the present disclosure;
FIG. 8 is a block diagram of an electronic shelf label system according to an exemplary embodiment of the present disclosure;
FIG. 9 is a flowchart for illustrating a method for managing power of an electronic tag according to an exemplary embodiment of the present disclosure;
FIG. 10 is a flowchart for illustrating a method for managing power of an electronic tag according to another exemplary embodiment of the present disclosure; and
FIG. 11 is a flowchart for illustrating a method for managing power of an electronic shelf label system according to an exemplary embodiment of the present disclosure.

### DETAILED DESCRIPTION

Hereinafter, embodiments of the present disclosure will be described in detail with reference to the accompanying drawings. The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art. In the drawings, the shapes and dimensions of elements may be exaggerated for clarity, and the same reference numerals will be used throughout to designate the same or like elements.

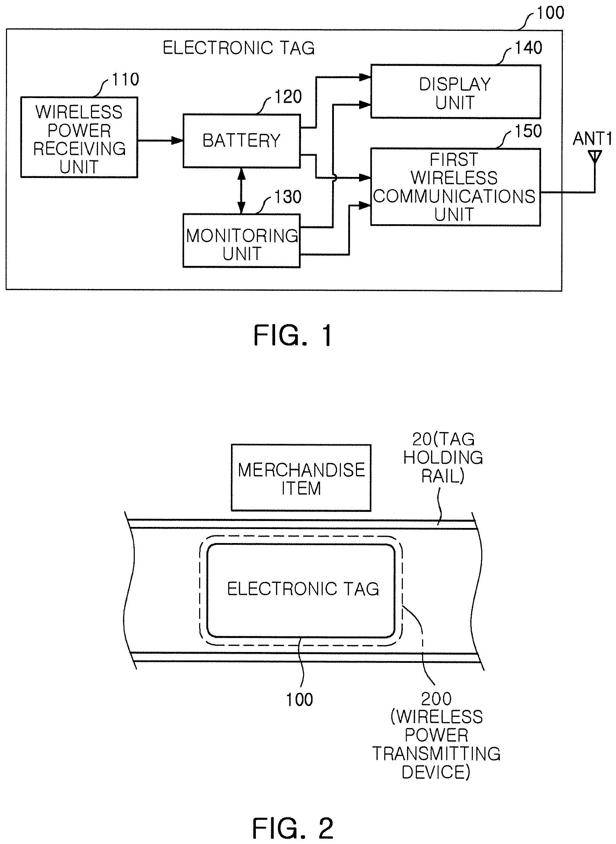

FIG. 1 is a block diagram of an electronic tag according to an exemplary embodiment of the present disclosure.

Referring to FIG. 1, the electronic tag according to the present disclosure may include a wireless power receiving unit 110, a battery 120, a monitoring unit 130, a display unit 140, and a first wireless communications unit 150.

FIG. 2 is a view showing the configuration of a system for wirelessly charging an electronic tag according to an exemplary embodiment of the present disclosure.

Referring to FIGS. 1 and 2, the system for wirelessly charging an electronic tag according to the exemplary embodiment may include a wireless power transmitting device 200 and an electronic tag 100.

As shown in FIG. 1, the electronic tag 100 may include the wireless power receiving unit 110, the battery 120, the monitoring unit 130, the display unit 140, and the first wireless communications unit 150.

The wireless power transmitting device 200 may sit inside a tag holding rail 20 and may transmit power in a wireless power transmission scheme.

The electronic tag 100 may be disposed on the tag holding rail 20, may receive power from the wireless power transmitting device 200 in a wireless transmission scheme to be charged, and may display merchandise item information on a screen using the charged power.

Referring to FIGS. 1 and 2, the wireless power receiving unit 110 in the electronic tag 100 may receive power from the wireless power transmitting device 200 in a wireless power transmission scheme.

Here, the wireless power transmission scheme may be a magnetic induction scheme or a magnetic resonance scheme.

The battery 120 may be charged with power received from the wireless power receiving unit 110. The battery 120 may be a rechargeable battery such as a secondary cell battery and may include, but is not limited to, a lithium ion battery, a lithium polymer battery or the like.

The monitoring unit 130 may monitor the power state of the battery 120 and may provide information on the power state of the battery. For example, the information on the power state of the battery may include information on the level of charged voltage, information on a low or empty charge state or a full charge state, and accordingly it can be determined whether the battery needs to be charged or is fully charged based on the information on the level of the voltage.

The display unit 140 may display on a screen the information on the power state of the battery 120 from the monitoring unit 130. The display unit 140 may display price information of a merchandise item or may display other information on merchandise items.

Further, the first wireless communications unit 150 may transmit the information on the power state of the battery 120 from the monitoring unit 130 along with tag identification information in a first wireless communications scheme. By utilizing the tag identification information, the power state of electronic tags can be managed individually.

Here, the first wireless communications scheme may be, but is not limited to, the ZigBee wireless communication protocol conforming to IEEE 802.15.4 standard.

The first wireless communications unit 150 may transmit the information on the power state of the battery 120 along with the tag identification information to a predetermined communication device. The predetermined communication device may be, but is not limited to, a gateway or server device that manages and controls merchandise item information and price information in the electronic tag or a terminal of a manager who manages a store where merchandise items are displayed.

The wireless power transmitting device 200 may employ a magnetic induction scheme or a magnetic resonance scheme.

Accordingly, the electronic tag 100 and the wireless power transmitting device 200 may employ the same wireless power transmission scheme.

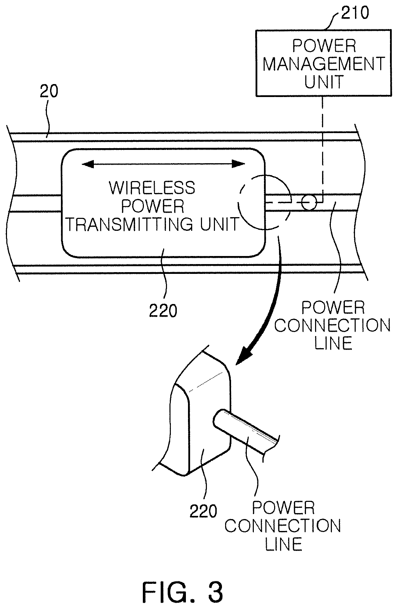

FIG. 3 is a view showing a wireless power transmitting device according to an exemplary embodiment of the present disclosure. The wireless power transmitting device 200 may include a power management unit 210 and a wireless power transmitting unit 220. The power management unit 210 may be a block capable of performing power conversion and control, and the wireless power transmitting unit 220 may be a block capable of transmitting power wirelessly. The two blocks may be implemented in two separate functional blocks or may be implemented in one functional block to perform the two functions described above.

Therefore, the technical idea of the present disclosure is not particularly limited to two functional blocks or one functional block as long as the wireless power transmitting device 200 includes the function of managing power and the function of transmitting power wirelessly.

The power management unit 210 may supply power to be transmitted wirelessly. The wireless power transmitting unit 220 may be electrically connected to the power management unit 210 and may sit inside the tag holding rail 20 so as to wirelessly transmit power from the power management unit 210. The wireless power transmitting unit 220 may be fixed to the tag holding rail 20 or may be slidable along the tag holding rail 20 so that it moves to a location where an electronic tag to be charged is disposed.

The power management unit 210 and the wireless power transmitting unit 220 may employ, but is not limited to, a magnetic induction scheme or a magnetic resonance scheme.

For example, if a magnetic resonance scheme is employed, the wireless power transmitting unit 220 may include a transmitting resonant part, and the wireless power transmitting frequency of the transmitting resonant part may be 6.78 MHz or 13.56 MHz conforming to the Alliance for Wireless Power (A4WP) standard.

Alternatively, the wireless power transmitting unit 220 may include a transmitting coil part that corresponds to a primary coil of a PWM controlled transformer. The wireless power transmitting frequency of the transmitting coil part may be 110KHz or 282KHz conforming to the wireless power consortium (WPC) standard, the power matters alliance (PMA) standard or the like.

For example, the wireless power transmitting unit 220 of the wireless power transmitting device 200 may be slidable along on the tag holding rail 20. A number of wireless power transmitting units 220 may be disposed in different areas on the tag holding rail 20, which are slidable along the tag holding rail 20.

As shown in FIG. 3, for example, a power connection line that is electrically connected to the power management unit 210 may be installed in the middle of the tag holding rail 20, and the wireless power transmitting unit 220 may sit inside the tag holding rail 20 so that it is slidable to the left and to the right, with being connected to the power connection line.

The structure in which the wireless power transmitting unit 220 slides is not particularly limited to a certain structure but may be variously implemented as long as the wireless power transmitting unit 220 is slidable along the tag holding rail 20 with being electrically connected to the power management unit 210.

As described above, it benefits to make the wireless power transmitting unit 220 slidable in that electronic tags can be charged with a fewer number of the wireless power transmitting units 220, compared to providing a wireless power transmitting unit 220 for every electronic tag.

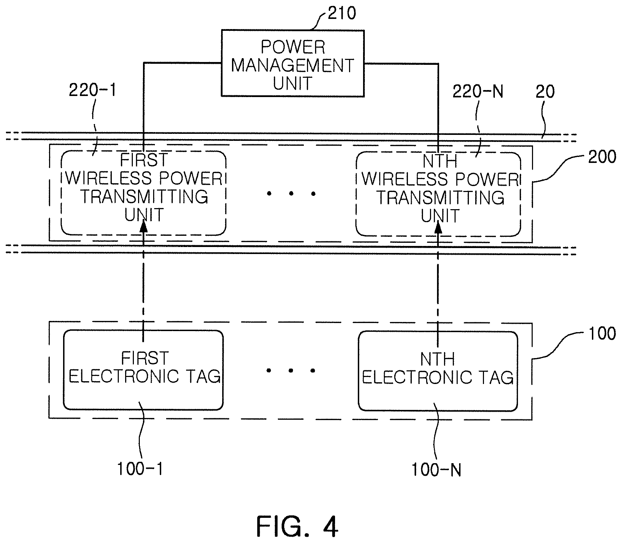

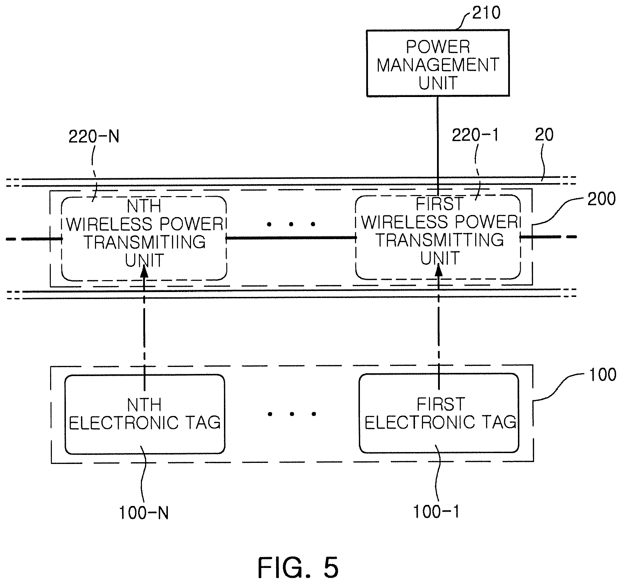

FIG. 4 is a view of a wireless power transmitting device according to another exemplary embodiment of the present disclosure, and FIG. 5 is a view of a wireless power transmitting device according to yet another exemplary embodiment of the present disclosure.

Referring to FIGS. 4 and 5, a wireless power transmitting unit 220 may include a power management unit 210 and first to N^{th} wireless power transmitting units 220-1 to 220-N.

The power management unit 210 may supply power to be transmitted wirelessly. Each of the first to N^{th} wireless power transmitting units 220-1 to 220-N may be connected to the power management unit 210 and may be fixed to a tag holding rail 20 in different areas thereon so as to transmit power from the power management unit 210 wirelessly.

As shown in FIG. 4, the power management unit 210 may be electrically connected to the first to N^{th} wireless power transmitting units 220-1 to 220-N in parallel. The first to N^{th} wireless power transmitting units 220-1 to 220-N may sit inside the tag holding rail 20, with one wireless power transmitting unit for each of first to N^{th} electronic tags 100-1 to 100-N.

Here again, the structure in which the first to N^{th} electronic tags 100-1 to 100N are disposed is not particularly limited to a certain structure but may be variously implemented as long as the wireless power transmitting units 220-1 to 220N sitting inside the tag holding rail 20 can wirelessly transmit power to the electronic tags, with being electrically connected to the power management unit 210. For example, the first to N^{th} electronic tags 100-1 to 100N may be fixed to or embedded in the tag holding rail 20.

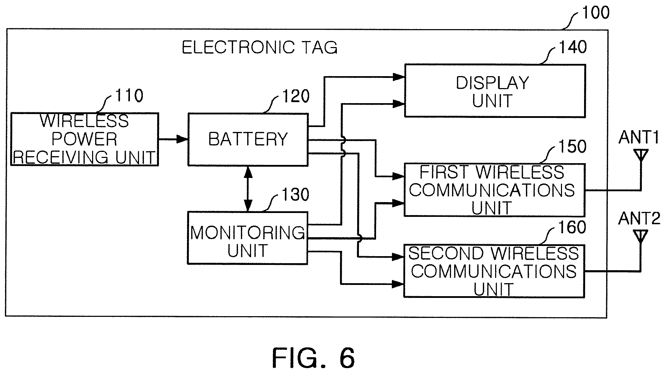

FIG. 6 is a block diagram of an electronic tag according to another exemplary embodiment of the present disclosure. Referring to FIG. 6, the electronic tag according to this exemplary embodiment may further include a second wireless communications unit 160 in addition to the elements in the electronic tag shown in FIG. 1.

In this exemplary embodiment, the information on a power state of the battery 120 may include various information items associated with the level of supply voltage, and, if the information on the power state of the battery 120 contains information on a low or empty charge state or a full charge state, the second wireless communications unit 160 may transmit a message indicating it to the terminal of a manager in a second wireless communications scheme.

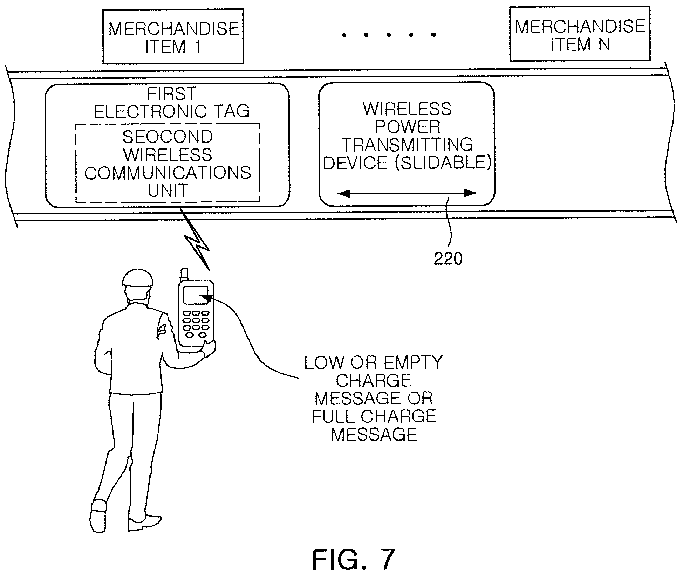

FIG. 7 is a view showing movement of the wireless power transmitting unit according to an exemplary embodiment of the present disclosure. Referring to FIGS. 3, 6 and 7, if the second wireless communications unit 160 transmits the information on the power state of the battery 120 including information on a low or empty charge state or a full charge state to the terminal of a manager , for example, the manager may check the information on a low or empty charge state or a full charge state using his terminal and may take an appropriate action depending on the information on the power state of the battery 120, such as moving the wireless power transmitting device to wirelessly charge an electronic tag or ending charging of an electronic tag.

The second wireless communications scheme may be the same as or different from the first wireless communications scheme.

For example, the second wireless communications scheme may be, but is not limited to, a personal area network (PAN) communication scheme according to Bluetooth^{®} technology standardized as IEEE 802.15.1 or may be a local area network (LAN) communication scheme conforming to IEEE 802.15.11x standard (x represents a, b, g, n, ac or the like).

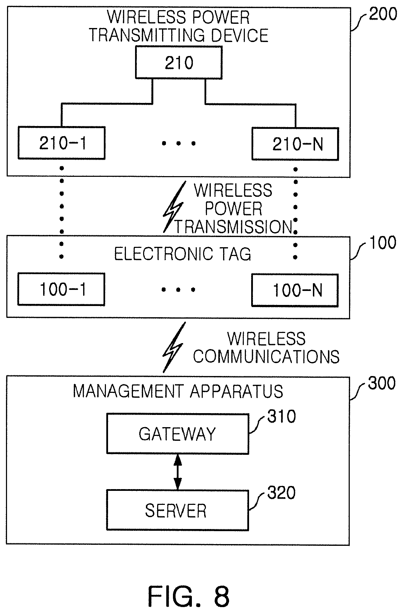

FIG. 8 is a block diagram of an electronic shelf label system according to an exemplary embodiment of the present disclosure.

Referring to FIG. 8, the electronic shelf label system according to the exemplary embodiment may include a wireless power transmitting device 200, electronic tags 100, and a management apparatus 300.

Among the wireless power transmitting device 200, the electronic tags 100, and the management apparatus 300, the same operations by the wireless power transmitting device 200 and the electronic tag 100 as those described above with respect to FIG. 1 may not be described again.

Referring to FIGS. 1 through 8, the wireless power transmitting device 200 may include a power management unit 210, and first to N^{th} wireless power transmitting units 220-1 to 220-N disposed in different areas on the tag holding rail 20.

The wireless power transmitting device 200 may transmit power in a wireless power transmission scheme.

The electronic tags 100 may include first to N^{th} electronic tags 110-1 to 100-N, each of which may be disposed in association with a respective one of first to N^{th} wireless power transmitting units 220-1 to 220-N.

The electronic tags 100 may receive power from the wireless power transmitting device 200 in a wireless power transmission scheme so as to be charged, may display merchandise item information on a screen, and may transmit detected information on a power state of the battery 120 using wireless communications.

Further, the management apparatus 300 may receive the information on the power state of the battery 120 from the electronic tags 100 using wireless communications. For example, the management apparatus 300 may include a gateway 310 and a server 320.

For example, the gateway 310 may receive wireless signals from the electronic tags 100 to transmit them to the server 320 and may wirelessly transmit a signal from the server 320 to the electronic tags 100. The server 320 may transmit merchandise item information to the electronic tags 100 via the gateway 310 and may receive, from the electronic tag 100, information on the state of the electronic tag 100 including information on the power state of the battery 120.

If the information on the power state of the battery 120 includes information on a low or empty charge state or a full charge state, the management apparatus 300 may transmit a message indicating it to the terminal of a manager using the first or second wireless communications scheme.

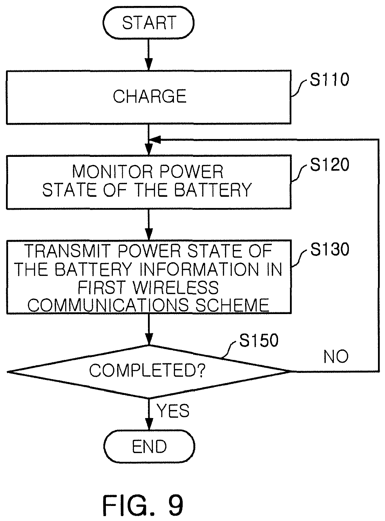

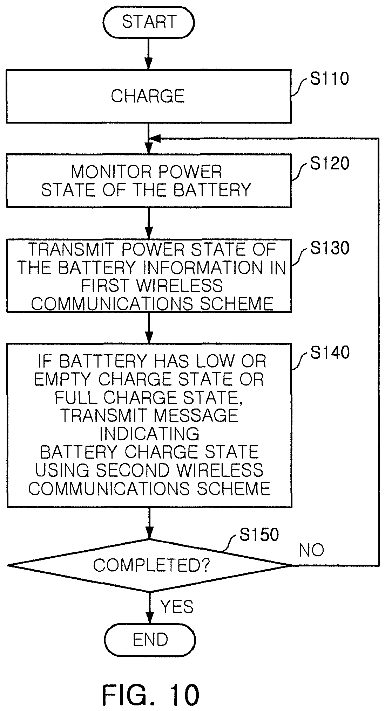

FIG. 9 is a flowchart for illustrating a method for managing power of an electronic tag according to an exemplary embodiment of the present disclosure, and FIG. 10 is a flowchart for illustrating a method for managing power of an electronic tag according to another exemplary embodiment of the present disclosure.

The methods for managing power of an electronic tag according to exemplary embodiments of the present disclosure will be described below with reference to FIGS. 1 through 10.

In the following descriptions on the methods for managing power of an electronic tag according to the exemplary embodiments of the present disclosure, the above descriptions with reference to FIGS. 1 to 8 may be equally applied, and thus the redundant descriptions will not be repeated.

Referring to FIGS. 1 through 9, an electronic tag 100 may be disposed at a charge location on a tag holding rail 20, and a wireless power receiving unit 110 in the electronic tag 100 may wirelessly receive power from a wireless power transmitting device 200 disposed at the charge location so as to charge a battery 120 in the electronic tag (S110).

Then, a monitoring unit 130 in the electronic tag 100 may monitor the power state of the battery 120 (S120).

Then, the first wireless communications unit 150 in the electronic tag 100 may transmit the information on the power state of the battery 120 from the monitoring unit 130 to a management apparatus 300 in a first wireless communications scheme (S130).

Referring to FIG. 10, if the information on the power state of the battery 120 includes information on a low or empty charge state or a full charge state, the electronic tag 100 may transmit a message indicating it to the terminal of a manager in a second wireless communications scheme (S140).

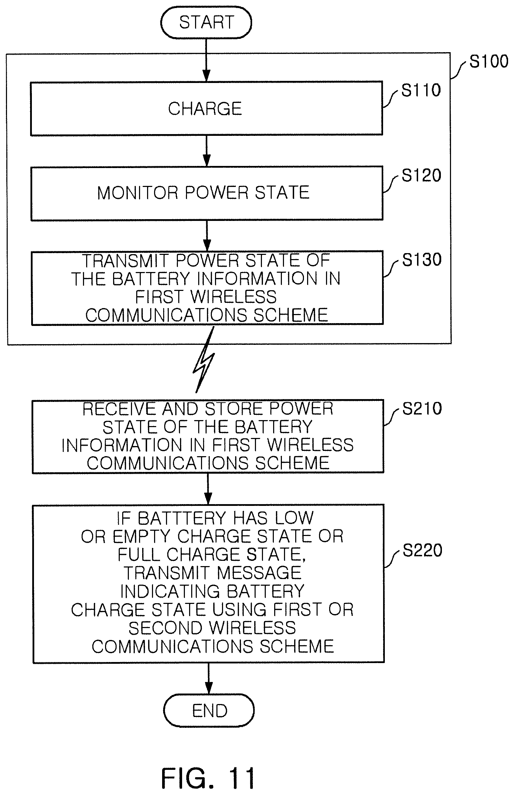

FIG. 11 is a flowchart for illustrating a method for managing power of an electronic shelf label system according to an exemplary embodiment of the present disclosure.

Referring to FIGS. 1 through 11, operations S110 through S130 in FIG. 11 may be performed in the same scheme as described above.

Then, the management apparatus 300 may receive information on the power state of the battery 120 to store it in association with an electronic tag 100 (S210).

Then, if the information on the power state of the battery 120 includes information on a low or empty charge state or a full charge state, the management apparatus 300 may transmit a message indicating it using wireless communications (S220) .

As set forth above, according to exemplary embodiments of the present disclosure, in an electronic shelf label system including an electronic tag, the wireless charging of the electronic tag and the monitoring and controlling of the power of the electronic tag can be performed integrally.

While exemplary embodiments have been shown and described above, it will be apparent to those skilled in the art that modifications and variations could be made without departing from the scope of the present disclosure as defined by the appended claims.

## Claims

1. A system for wirelessly charging an electronic tag (100), comprising:
a wireless power transmitting device (200) configured to transmit device transmitting power in a wireless power transmission scheme; and
an electronic tag (100) configured to receive the power from the wireless power transmitting device (200) in a wireless power transmission scheme so as to be charged and configured to display merchandise item information on a screen, wherein the electronic tag (100) includes:
a wireless power receiving unit (110) configured to receive power in a wireless power transmission scheme;
a battery (120) configured to be charged with the power received from the wireless power receiving unit (110);
a monitoring unit (130) configured to monitor a power state of the battery (120);
a display unit (140) configured to display information on the power state of the battery from the monitoring unit on a screen; and
a first wireless communications unit (150) configured to wirelessly transmit the information on the power state of the battery (120) from the monitoring unit (130) together with tag identification information in a first wireless communications scheme, wherein the wireless power transmitting device (200) includes: a power management unit (210) configured to supply power to be wirelessly transmitted; and
a wireless power transmitting unit (220) configured to be electrically connected to the power management unit (210) and be slidable along a tag holding rail (20) so as to wirelessly transmit the power from the power management unit (210).

2. The system of claim1, wherein the wireless power transmitting device (200) includes first to N^{th} wireless power transmitting units configured to be electrically connected to the power management unit (210) and be fixed to a tag holding rail (20) in different regions so as to wirelessly transmit the power from the power management unit (210).

3. The system of claim 1, wherein the electronic tag (100) further includes: a second wireless communications unit (160), if the information on the power state of the battery (120) includes information on a low or empty charge state or a full charge state, configured to transmit a message indicating the information on a low or empty charge state or a full charge state to a terminal of a manager in a second wireless communications scheme.

4. The system of claim 1, being an electronic shelf label system, further comprising:
a management apparatus (300) configured to receive the information on the power state of the battery (120) from the electronic tag (100) using wireless communications.

5. The electronic shelf label system of claim 4, wherein the wireless power transmitting unit (220) is electrically connected to the power management unit (210) and is slidable along the tag holding rail (20).

6. The electronic shelf label system of claim 4, wherein the wireless power transmitting device (200) includes:
first to N^{th} wireless power transmitting units being electrically connected to the power management unit (210) and being disposed in different areas on tag holding rail (20) so as to wirelessly transmit the power from the power management unit (210).

## Patentansprüche

1. System zum drahtlosen Aufladen eines elektronischen Etiketts (100), Folgendes umfassend:
eine drahtlose Energieübertragungsvorrichtung (200), die ausgelegt ist, Vorrichtungsübertragungsenergie in einem drahtlosen Energieübertragungsschema zu übertragen; und
ein elektronisches Etikett (100), das ausgelegt ist, die Energie von der drahtlosen Energieübertragungsvorrichtung (200) in einem drahtlosen Energieübertragungsschema zu empfangen, um aufgeladen zu werden, und ausgelegt ist, Wareneinheiteninformationen auf einem Bildschirm anzuzeigen, wobei das elektronische Etikett (100) Folgendes enthält:
eine drahtlose Energieempfangseinheit (110), die ausgelegt ist, Energie in einem drahtlosen Energieübertragungsschema zu empfangen;
eine Batterie (120), die ausgelegt ist, mit der von der drahtlosen Energieempfangseinheit (110) empfangenen Energie aufgeladen zu werden;
eine Überwachungseinheit (130), die ausgelegt ist, einen Energiezustand der Batterie (120) zu überwachen;
eine Anzeigeeinheit (140), die ausgelegt ist, Informationen über den Energiezustand der Batterie von der Überwachungseinheit auf einem Bildschirm anzuzeigen; und
eine erste Drahtloskommunikationseinheit (150), die ausgelegt ist, drahtlos die Informationen über den Energiezustand der Batterie (120) von der Überwachungseinheit (130) zusammen mit Etiketteninformationen in einem ersten Drahtloskommunikationsschema zu übertragen,
wobei die drahtlose Energieübertragungsvorrichtung (200) Folgendes enthält: eine Energieverwaltungseinheit (210), die ausgelegt ist, drahtlos zu übertragende Energie zu liefern; und
eine drahtlose Energieübertragungseinheit (220), die ausgelegt ist, elektrisch mit der Energieverwaltungseinheit (210) verbunden zu sein und entlang einer Etikettenhalteschiene (20) verschiebbar zu sein, um die Energie von der Energieverwaltungseinheit (210) drahtlos zu übertragen.

2. System nach Anspruch 1, wobei die drahtlose Energieübertragungsvorrichtung (200) erste bis N-te drahtlose Energieübertragungseinheiten enthält, die ausgelegt sind, elektrisch mit der Energieverwaltungseinheit (210) verbunden zu sein und in verschiedenen Regionen an einer Etikettenhalteschiene (20) befestigt zu sein, um die Energie von der Energieverwaltungseinheit (210) drahtlos zu übertragen.

3. System nach Anspruch 1, wobei das elektronische Etikett (100) ferner Folgendes enthält: eine zweite Drahtloskommunikationseinheit (160), die, falls die Informationen über den Energiezustand der Batterie (120) Informationen über einen niedrigen oder leeren Ladungszustand oder einen vollen Ladungszustand enthalten, ausgelegt ist, eine Nachricht, die die Informationen über einen niedrigen oder leeren Ladungszustand oder einen vollen Ladungszustand angibt, an ein Endgerät eines Geschäftsführers in einem zweiten Drahtloskommunikationsschema zu übertragen.

4. System nach Anspruch 1, bei dem es sich um ein elektronisches Regalschildsystem handelt, ferner Folgendes umfassend:
eine Verwaltungseinrichtung (300), die ausgelegt ist, die Informationen über den Energiezustand der Batterie (120) von dem elektronischen Etikett (100) unter Verwendung von Drahtloskommunikation zu empfangen.

5. Elektronisches Regalschildsystem nach Anspruch 4, wobei die drahtlose Energieübertragungseinheit (220) elektrisch mit der Energieverwaltungseinheit (210) verbunden ist und entlang der Etikettenhalteschiene (20) verschiebbar ist.

6. Elektronisches Regalschildsystem nach Anspruch 4, wobei die drahtlose Energieübertragungsvorrichtung (200) Folgendes enthält:
erste bis N-te drahtlose Energieübertragungseinheiten, die elektrisch mit der Energieverwaltungseinheit (210) verbunden sind und in verschiedenen Bereichen auf der Etikettenhalteschiene (20) angeordnet sind, um die Energie von der Energieverwaltungseinheit (210) drahtlos zu übertragen.

## Revendications

1. Système de charge sans fil d'une étiquette électronique (100), comprenant :
un dispositif de transmission d'énergie sans fil (200) configuré pour transmettre une énergie de transmission de dispositif dans un schéma de transmission d'énergie sans fil ; et
une étiquette électronique (100) configurée pour recevoir l'énergie en provenance du dispositif de transmission d'énergie sans fil (200) dans un schéma de transmission d'énergie sans fil de façon à être chargée et configurée pour afficher des informations d'article de marchandise sur un écran, dans lequel l'étiquette électronique (100) comporte :
une unité de réception d'énergie sans fil (110) configurée pour recevoir de l'énergie dans un schéma de transmission d'énergie sans fil ;
une batterie (120) configurée pour être chargée avec l'énergie reçue en provenance de l'unité de réception d'énergie sans fil (110) ;
une unité de surveillance (130) configurée pour surveiller un état d'énergie de la batterie (120) ;
une unité d'affichage (140) configurée pour afficher des informations sur l'état d'énergie de la batterie provenant de l'unité de surveillance sur un écran ; et
une première unité de communications sans fil (150) configurée pour transmettre sans fil les informations sur l'état d'énergie de la batterie (120) provenant de l'unité de surveillance (130) conjointement à des informations d'identification d'étiquette dans un premier schéma de communications sans fil,
dans lequel le dispositif de transmission d'énergie sans fil (200) comporte : une unité de gestion d'énergie (210) configurée pour fournir de l'énergie à transmettre sans fil ; et
une unité de transmission d'énergie sans fil (220) configurée pour être raccordée électriquement à l'unité de gestion d'énergie (210) et pour être coulissante le long d'un rail porte-étiquette (20) de façon à transmettre sans fil l'énergie provenant de l'unité de gestion d'énergie (210).

2. Système selon la revendication 1, dans lequel le dispositif de transmission d'énergie sans fil (200) comporte des première à N^{e} unités de transmission d'énergie sans fil configurées pour être raccordées électriquement à l'unité de gestion d'énergie (210) et être fixées à un rail porte-étiquette (20) dans des régions différentes de façon à transmettre sans fil l'énergie provenant de l'unité de gestion d'énergie (210).

3. Système selon la revendication 1, dans lequel l'étiquette électronique (100) comporte en outre : une seconde unité de communications sans fil (160), si les informations sur l'état d'énergie de la batterie (120) comportent des informations sur un état de charge faible ou vide ou un état de pleine charge, configurée pour transmettre un message indiquant les informations sur un état de charge faible ou vide ou un état de pleine charge à un terminal d'un gestionnaire dans un second schéma de communications sans fil.

4. Système selon la revendication 1, qui est un système d'étiquette de rayon électronique, comprenant en outre :
un appareil de gestion (300) configuré pour recevoir les informations sur l'état d'énergie de la batterie (120) en provenance de l'étiquette électronique (100) à l'aide de communications sans fil.

5. Système d'étiquette de rayon électronique selon la revendication 4, dans lequel l'unité de transmission d'énergie sans fil (220) est raccordée électriquement à l'unité de gestion d'énergie (210) et est coulissante le long du rail porte-étiquette (20).

6. Système d'étiquette de rayon électronique selon la revendication 4, dans lequel le dispositif de transmission d'énergie sans fil (200) comporte :
des première à N^{e} unités de transmission d'énergie sans fil raccordées électriquement à l'unité de gestion d'énergie (210) et disposées dans des zones différentes sur le rail porte-étiquette (20) de façon à transmettre sans fil l'énergie provenant de l'unité de gestion d'énergie (210).
